# EUROPEAN PATENT SPECIFICATION

(11) **EP 0 619 196 B1**
(45) Date of publication and mention of the grant of the patent: **17.12.1997**
(21) Application number: 94102763.3
(22) Date of filing: 24.02.1994
(51) Int. Cl.: B60G 15/06

(54) **Mounting member for connecting a spring-shock absorber unit to a motor-vehicle body**
Befestigungselement für die Verbindung einer Feder-Stossdämpfereinheit an einem Fahrzeugaufbau
Elément de montage pour connecter un ensemble ressort-amortisseur de chocs à la carrosserie de véhicule

(30) Priority: 01.03.1993 IT MI930392
(43) Date of publication of application: 12.10.1994
(73) Proprietor: C.F. GOMMA S.p.A., 25050 Passirano (Brescia) (IT)
(72) Inventor: Seghi, Paolo, I-20138 Milano (IT); Sgorbati, Renzo, I-29010 Agazzano, Piacenza (IT)
(74) Representative: Righetti, Giuseppe

(56) References cited:
- EP-A- 0 301 517
- EP-A- 0 386 776
- EP-A- 0 490 724
- DE-A- 3 812 477
- DE-A- 3 935 755
- FR-A- 1 374 735
- FR-A- 1 469 346
- FR-A- 2 265 565
- FR-A- 2 279 579
- FR-A- 2 613 011
- GB-A- 1 006 467
- GB-A- 2 026 131
- PATENT ABSTRACTS OF JAPAN vol. 8, no. 267 (M-343) (1074) 7 December 1984 & JP-A-59 140 110 (HONDA) 11 August 1984
- PATENT ABSTRACTS OF JAPAN vol. 14, no. 75 (M-934) (4018) 13 February 1990 & JP-A-01 293 210 (MAZDA) 27 November 1989

## Description

The present invention relates to a mounting member for connecting a spring-shock absorber unit to a motor-vehicle body, the mounting member being accessible through an opening in the vehicle body, the mounting member being of the type comprising: a central thrust element fastened to one end of a shock absorber and exhibiting an outer frusto-conical surface faced away from the shock-absorber and a rest housing placed at the lower part of the thrust element and arranged to operatively engage the end of a spring being part of the spring-shock absorber unit; an annular retaining element fastened to said body and exhibiting an inner frusto-conical surface faced towards the outer frusto-conical surface of the central thrust element, whereby the annular retaining element is fully located in a space disposed below the motor-vehicle body; an annular spring member made of elastomeric material and operatively interposed between the outer frusto-conical surface of the central thrust element and the inner frusto-conical surfaces of the annular retaining element and arranged to elastically counteract axial thrust forces tending to move the frusto-conical surfaces close to each other; a cup-shaped auxiliary thrust element fastened to the shock-absorber such that a base portion thereof is adiacent the central thrust element.

In greater detail, the mounting member referred to in the present description is adapted for use in combination with spring-shock absorber units associated with motor-vehicle suspension means of the Mc Pherson type.

It is known that in suspension means of the above type the spring absorption of the dynamic stresses transmitted by the wheel during the ride normally relies on an upper spring-shock absorber unit interconnected with the motor-vehicle body through an appropriate mounting member.

Known mounting members, one of which is described in French Patent No. 2514303 to which reference is herein made as an explanatory example of the state of the art, comprise an annular retaining element substantially of truncated conical form fastened to the motor-vehicle body and projecting upwardly from the body itself, at an opening formed therein. Housed in the annular retaining element is an annular member made of elastomeric material integrally engaged by a rubber bond with an inner surface, of truncated conical form, of the annular retaining element.

The annular member made of elastomeric material in turn houses a central thrust element exhibiting an outer surface of truncated conical form integrally joined to the elastomeric member by a rubber metal bond too.

Defined in the central thrust element is a through opening at which a shock absorber rod being part of said spring-shock absorber unit is engaged. In greater detail, the central thrust element is sandwiched between a locating abutment formed close to the end of the rod and a stop nut operatively engaged on a screw threaded end portion of the rod itself.

In addition, a shaped plate is necessarily associated with the mounting member and it is designed to offer a perimetric rest housing for the end of a spring combined with the shock absorber. This plate, made separately from the mounting member, is fitted on the end of the shock absorber rod before being connected to the mounting member itself. When assembling has been completed, the shaped plate is held between the locating abutment arranged on the shock absorber rod and the central thrust element of the mounting member.

Document DE-A-39 35 755, which is herein referred as the most relevant prior art, discloses a spring-shock absorber unit for a motor vehicle, which is connected to the vehicle body by a mounting member which is accessible through an opening provided in the vehicle body itself. Such a mounting member coprises a central thrust element defined by a shaped plate having a bottom portion engaged to the end of a shock absorber, an intermediate portion defining an outer frusto-conical surface, and a lower perimetric portion defining a rest housing which operatively engages the end of the spring.

The external frusto-conical surface of the thrust element engages an elastomeric annular member which results sandwiched between the thrust element itself and an annular retaining member connected to the vehicle body coaxially to the opening provided in this latter.

The elastomeric annular body engages also a cup-shaped auxiliary thrust element fastened to the end of the shock absorber such that its base portion is adjacent to the bottom portion of the shaped plate forming the first thrust element.

It has been found that by embodying the central thrust element and shaped plate as a single structure defined by a unitary piece, several advantages can be achieved to an extent greater than expected in terms both of reduction of the number of mechanical parts to be used for a reliable coupling between the spring-shock absorber unit and the body and simplification in the process for making and assembling the suspension, as well as in terms of utilization of the spaces in the mounting area between the spring-shock absorber unit and the body.

In particular, the invention relates to a mounting member for connecting a spring-shock absorber unit to a motor-vehicle body, characterized in that the inner surface of said annular retaining element further comprises an upper circumferential edge portion extending inwardly with respect to the edge of said opening in the vehicle body, and in that an auxiliary annular portion is associated with the annular spring member at the upper part thereof and it overlies said annular retaining element and is operatively interposed between the retaining element and an upwardly and outwardly extending auxiliary frusto-conical surface defined by said auxiliary thrust element.

In greater detail, the central thrust element is essentially defined by a shaped plate having a bottom portion engaged to the end of the shock-absorber, an intermediate portion defining the outer frusto-conical surface in contact relationship with the annular member and a perimetric portion defining the rest housing of the spring.

In a preferential solution the mounting member further comprises at least one gasket made of elastomeric material engaged to the rest housing of the central thrust element and sandwiched between the spring end and the rest housing itself.

Advantageously, the annular spring member and said gasket are fixedly joined respectively to said inner and outer frusto-conical surfaces and to the rest housing by a rubber metal bond.

In addition, still by a rubber metal bond, at least one coating layer of elastomeric material can be applied to the surface of the central thrust element.

At least one rolling or plain bearing may also be operatively interposed between the rest housing and the spring end. This solution is particularly appropriate when the mounting member is associated with a suspension means for steering wheels.

In a preferential solution the annular spring member is also provided to have a circumferential groove defining first and second abutment surfaces designed to act in contrast relationship against each other for increasing the stiffness of the spring ring when the load transmitted by the central thrust element exceeds a predetermined value.

Advantageously, the inner and outer frusto-conical surfaces can have a tapering configuration the summit angle of which varies from zero to 90°, in contrast with the limited variability of the angles in known solutions that are in the range of zero to 30° on an average.

Preferentially, the annular spring member has an axial stiffness in the range of 30 Kg/mm to 100 kg/mm, and a radial stiffness ranging from 60 Kg/mm to 200 Kg/mm, the ratio between the radial and axial stiffnesses being included between 1 and 4.

Further features and advantages will become more apparent from the detailed description of a preferred embodiment of a mounting member for connecting a spring-shock absorber unit to a motor-vehicle body according to the present invention, given hereinafter by way of non-limiting example with reference to the accompanying drawings, in which:
- Fig. 1 is a fragmentary sectional view showing the mounting member in reference, operatively interposed between a motor-vehicle body and a spring-shock absorber unit in a suspension of the Mc Pherson type;
- Fig. 2 is a comparative drawing showing the different arrangement of the components of the mounting member according to the present invention as compared to a mounting member made in accordance with the known art;
- Fig. 3 shows a detail of the mounting member shown in Fig. 1;
- Fig. 3a is a diagram showing the stiffness of the mounting member made as shown in Figs. 1 and 3, in the presence of axial stresses;
- Fig. 4 is a fragmentary sectional view showing a different embodiment of the mounting member in reference, the annular member of which made of elastomeric material has a different profile in section than the one seen in Fig. 1;
- Fig. 4a is a diagram showing the stiffness of the mounting member seen in Fig. 4 in the presence of axial stresses.

Referring to the drawings, a mounting member for connecting a spring-shock absorber unit to a motor-vehicle body in accordance with the invention has been generally identified by reference numeral 1.

The mounting member 1 is associated with a suspension of the Mc Pherson type, not shown as a whole as known per se and conventional and is adapted to conveniently connect the upper part of a spring-shock absorber unit 2 to a motor-vehicle body 3, only partly shown.

The mounting member 1 essentially comprises a central thrust element 4 fastened to the upper end of a shock-absorber 5 being part of the spring-shock absorber unit 2, an annular retaining element 6 fastened to the body 3 and an annular member 7 made of elastomeric material and operatively interposed between the central thrust element 4 and annular retaining element 6. In greater detail, the annular spring member 7 is interposed between an outer frusto-conical surface 8 exhibited by the central thrust element 4 and faced away from the shock absorber 5, and an inner frusto-conical surface 9 exhibited by the annular retaining element 6 and faced towards the outer frusto-conical surface 8. Under this situation, the annular spring member 7 lends itself to undergo elastic deformation in order to counteract axial forces transmitted by the spring-shock absorber unit 2 and tending to cause the inner 9 and outer 8 frusto-conical surfaces to move close to each other. The annular member 7 is subjected to elastic deformation in the presence of transverse forces too.

A perimetric rest housing 10a is also provided; it is designed to operatively engage the upper end of a helical spring 10 disposed about the shock absorber 5 and defining therewith said spring-shock absorber unit 2.

In an original manner, this perimetric housing 10a is directly defined in the lower portion of the central thrust element 4. In greater detail, the central thrust element 4 is essentially defined, as clearly seen in the accompanying figures, by a shaped plate exhibiting a bottom portion 11 connected to the upper end of a rod 5a of the shock absorber 5, an intermediate portion 12 defining said outer frusto-conical surface and a lower perimetric portion 13 defining the rest housing 10a for the spring 10 end. The bottom portion 11 is coaxially fitted on the upper end of the rod 5a and held against a locating abutment 5b arranged thereon upon the action of a stop nut 14 to be screwed to the end of the rod and accessible through an opening 3a provided in the motor-vehicle body 3.

In addition, provision is made for at least one gasket of elastomeric material 15 to be arranged at the rest housing 10a, which gasket is operatively interposed between the spring end and the rest housing itself. The gasket 15 of elastomeric material may advantageously be made simultaneously with the forming step of the annular spring member 7 by injection of the elastomeric material between the shaped plate forming the central thrust element 4 and the annular retaining element 6 arranged in an appropriate mould. In known manner, during the above forming step a steady adhesion is simultaneously achieved by vulcanization, through a rubber metal bond, between the annular spring member 7 and the inner 9 and outer 8 frusto-conical surfaces, as well as between the gasket 15 and the rest housing 10a. During this same step the simultaneous application of one or more coating layers 16, 16a of elastomeric material may be also carried out on the remaining surfaces of the central thrust element 11, at least at the areas designed to be exposed to the surrounding atmosphere.

In addition, a rolling or plain bearing, not shown as known per se, may be also operatively disposed in the rest housing 10a in addition to or optionally in place of the gasket 15; said bearing is adapted to facilitate rotational movements of the spring 10 relative to the rest housing, above all when the mounting member 1 is associated with a suspension means belonging to the steering wheels of a motor-vehicle.

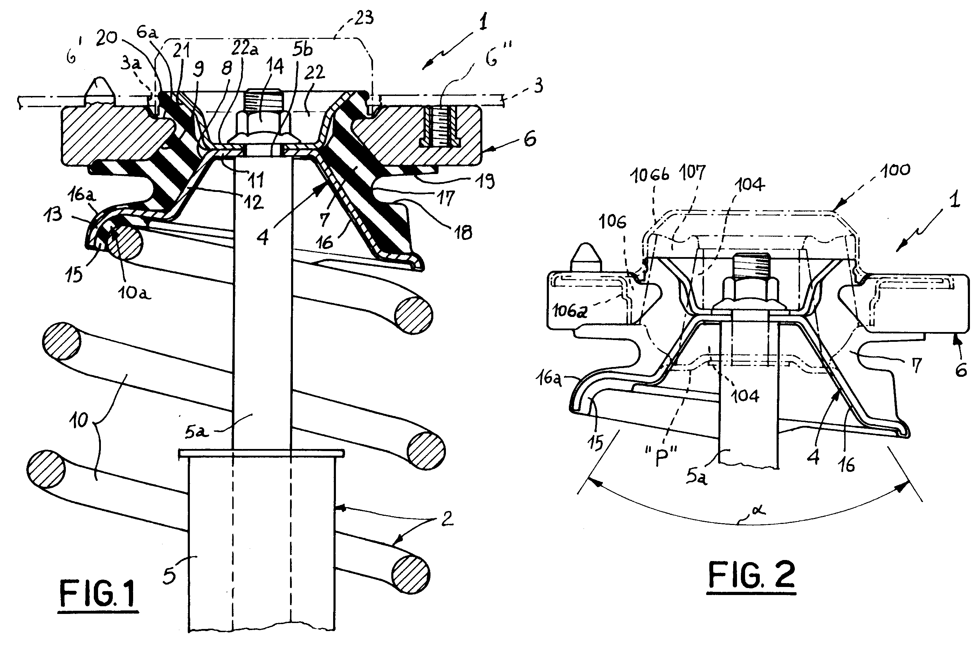

For better emphasizing the particular features and advantages offered by the present invention as compared to the known art, schematically reproduced in solid line in Fig. 2 is the sectional profile of the mounting member in reference superimposed on the sectional profile in dotted line of a mounting member 10 made in accordance with the known art and adapted to connect a structurally identical suspension. For the sake of clarity the dotted lines have been omitted in the sectioned parts.

The construction elements of the known mounting member 100 corresponding to those described with reference to the mounting member 1 of the invention have been identified by the same reference numerals increased by 100. In Fig. 2 it is first of all possible to note that in the known mounting member 100 the annular retaining element 106 is necessarily enclosed between two additional enclosing members 106, 106b adapted to enable connection with the motor-vehicle body 3.

In addition and above all, it will be seen that an additional plate "P" carrying the rest housing 10a for said spring end must be necessarily associated with the central thrust element 104.

Therefore it is well apparent that in the present invention the association of the rest housing 10a directly with the central thrust element 4 in the form of a shaped plate has enabled the mounting member 1 as a whole to be constructed in a much simpler manner, by virtue both of the smaller number of pieces to be made and assembled and to the lower number of workings to be carried out during the production cycle. In the connection it is to be noted that in the mounting member in reference the accomplishment of the annular spring member 7, gasket 15 arranged in the rest housing 9, and optional elastomeric coating layer 16, 16a can be achieved by a single moulding and vulcanization operation during which the steady rubber metal bond between the listed components is achieved.

In contrast with the above, in the mounting member 100 of the known art the plate "P" was necessarily produced separately from the central thrust element 104, which brought about an increase in the overall costs for manufacturing and assembling the mounting member 100. In this known solution in addition, the arrangement of the gasket 9 and the optional elastomeric protective coating 16 was also problematic because a different manufacturer than the one making the mounting member 100 was usually entrusted with the construction of the plate "P" and, at all events, the additional moulding and vulcanization process to be carried out for producing them involved an important increase in costs. In particular, it will be recognized that the new solution based on a single operation involving a rubber metal bond between the thrust element 4 and elastomeric annular member avoids the occurrence of unevennesses which are at least potentially due to a multi-step assembling of several pieces of the same suspension produced by different manufacturers.

It is also apparent still from Fig. 2 that the solution proposed by the present invention advantageously enables the annular retaining element 6, annular spring member 7 and central thrust element 4 to be completely disposed under the motor-vehicle body 3, unlike the mounting member 100 of the known art where these members project upwardly from the motor-vehicle body 3 at least partly, through the opening 3a arranged therein.

Still further advantages are therefore achieved by the mounting member in reference. In fact, since it was necessary to make the known mounting members jut out of the body 3, not only undesired aesthetic effects were present, but important bulkiness problems existed above all with reference to the rear suspension means in motor-vehicles the mounting members of which projected upwardly in the luggage compartment.

Placement of the annular retaining element 6, annular spring member 7 and central thrust element 4 completely under the vehicle body 3 enables a greater freedom in the design of the structural configuration to be given to the components of the mounting member 1 and in particular to the annular spring member 7 for achieving a desired behaviour towards the dynamic stresses transmitted by the spring-shock absorber unit 2. In particular, it is advantageously possible to give the outer 8 and inner 9 frusto-conical surfaces and therefore the annular spring member 7 in the area included between said surfaces, a tapering configuration having a summit angle "α" greatly larger than the maximum limits achievable in the known art solutions. In the known art in fact, values for the summit angle "α" higher than given limits, generally on the order of 60°, would have involved an excessive increase of the diametrical bulkiness of the mounting member portion jutting out of the motor-vehicle body 3.

This increase in the radial bulkiness would have brought about the modification of the positions of the means 6', 6'' for connecting the mounting member to the body and the modification would have involved unacceptable variations to the design proposed by the suspension's user.

In accordance with the present invention, on the contrary, it is practically possible to give the summit angle "α" of the annular spring member 7 any value included between 0° and 180°, without involving any increase in the diametric sizes of the annular retaining element 6 and/or the mounting member 1 as a whole.

In fact, the arrangement of the frusto-conical surfaces 8, 9 under the body 3 enables the inclination thereof to be varied for achieving the desired stiffness without modifying the position of points 6' and 6'' previously established by the car's buyer.

Advantageously, by increasing the value of angle "α", when particular requirements arise, it will be possible to reduce the stiffness offered by the mounting member 1 towards radial stresses with respect to the axis of the rod 5a, for example generated during the motor-vehicle acceleration and braking steps and on bending.

In a preferential solution, the radial stiffness value is included between 60 Kg/mm and 200 Kg/mm.

Preferentially the annular spring member 7 has a hardness in the range of 45 A Shore to 75 A Shore. Also the behaviour of the mounting member 1 towards axial stresses may be advantageously modified depending on requirements, by appropriately acting on the structure conformation of the annular spring member 7.

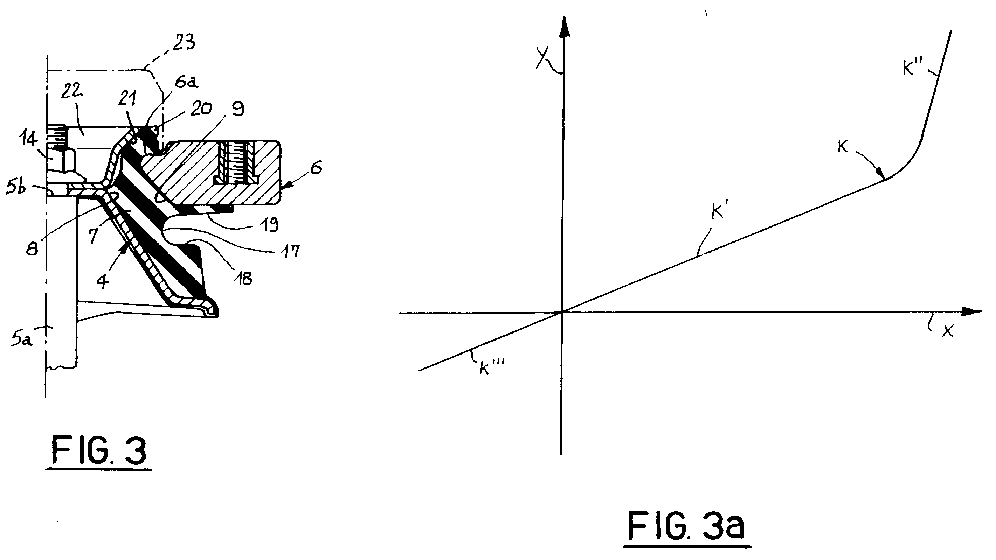

In the embodiment shown in Fig. 1, for example, the annular spring member 7 is provided, in the area under the annular retaining element 6, with at least one circumferential groove 17 defining a first and a second abutment surfaces 18, 19 arranged to act in contrast relationship against each other for improving the stiffness of the annular spring member towards axial stresses when said stresses exceed a predetermined value. For a better explanation of this concept, curve "K" reproduced in the diagram in Fig. 3a shows on the abscissa "X" the displacements undergone by the central thrust element 4 on varying of the loads applied thereto, in turn represented by the ordinate "Y". It will be easily seen that the curve "K" has a first length "K'" and a second length "K''" of different inclination with respect to the abscissa "X", which proves the variation in stiffness exhibited by the mounting member 1 when a given axial stress value is exceeded. The transition point between lengths "K'" and "K''" represents the situation in which on achievement of said stress value, the contact between the abutment surfaces 18, 19 defining the circumferential groove 17 occurs.

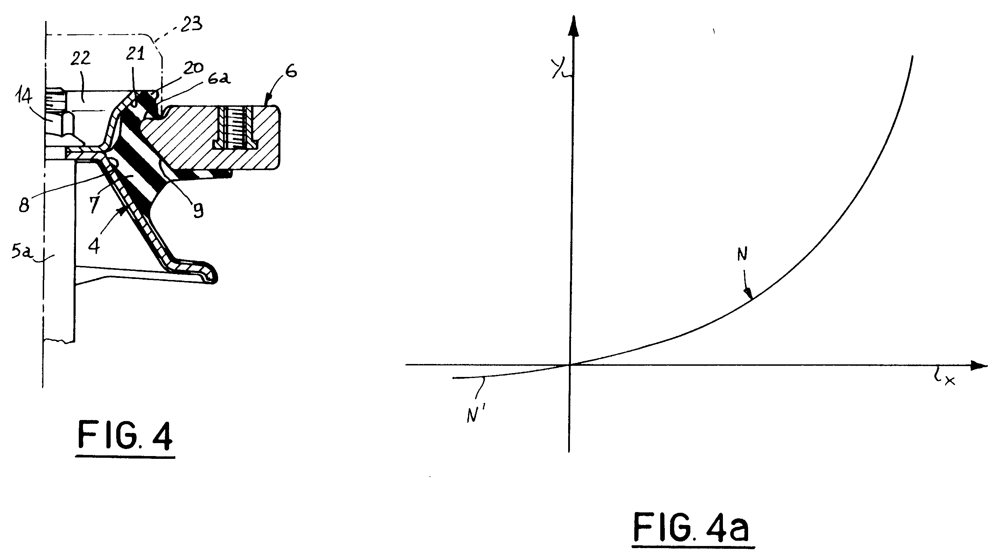

By way of example, Fig. 4 shows another embodiment of the annular spring member 7 devoid of the above circumferential groove 17. In this case, the stiffness of the mounting member 1 gradually increases as the axial stress load represented by curve "N" in the diagram in Fig. 4a increases.

Preferably, the axial stiffness value of the mounting member is at all events included between 30 Kg/mm and 100 Kg/mm.

It is also preferentially provided that the ratio between the radial stiffness and axial stiffness of the mounting member 1 be included between 1 and 4.

In accordance with a further feature of the present invention, the space made available in the areas immediately above the body 3 can be advantageously utilized for housing elements adapted to give further additional functions to the mounting member 1.

In the connection, in the embodiment shown in the accompanying figure the annular spring member 7 is advantageously provided with an auxiliary annular portion 20 overlying an inner circumferential edge 6a of the annular retaining element 6. This auxiliary annular portion 20 formed unitary with the annular spring member 7, is operatively interposed between the retaining ring 6 and an auxiliary frusto-conical surface 21 peripherically defined by an auxiliary thrust element fastened to the end of the shock absorber 5. In greater detail, the auxiliary thrust element 22 is essentially defined by a cup-shaped element the central base portion 22a of which is fitted on the rod 5a end and sandwiched between the bottom portion 11 of the shaped plate forming the central thrust element 4 and the stop nut 14. Under this situation, the auxiliary annular portion 20 lends itself to undergo elastic deformation for counteracting by a stiffness value represented by lengths K''' and N' in curves K and N, axial stresses directed in the opposite way with respect to those causing the compression of the annular spring member 7 between the inner 9 and outer 8 frusto-conical surfaces.

In addition, on the auxiliary annular portion 20 a covering cap 23 shown in dotted line may be fitted.

It is to be pointed out that the accomplishment of the auxiliary annular portion 20 can take place simultaneously with the formation of the elastomeric annular member 7 during said moulding and vulcanization step, without any substantial increase in the manufacture costs of the mounting member as a whole being involved.

## Claims

1. A mounting member for connecting a spring-shock absorber unit to a motor-vehicle body, the mounting member being accessible through an opening (3a) in the vehicle body, the mounting member comprising:
- a central thrust element (4) fastened to one end of a shock absorber (5) and exhibiting an outer frusto-conical surface (8) faced away from the shock-absorber and a rest housing (10a) placed at the lower part of the thrust element and arranged to operatively engage the end of a spring (10) being part of the spring-shock absorber unit;
- an annular retaining element (6) fastened to said body (3) and exhibiting an inner frusto-conical surface (9) faced towards the outer frusto-conical surface (8) of the central thrust element (4), whereby the annular retaining element (6) is fully located in a space disposed below the motor-vehicle body (3);
- an annular spring member (7) made of elastomeric material and operatively interposed between the outer frusto-conical surface (9) of the central thrust element (4) and the inner frusto-conical surfaces (9) of the annular retaining element (6) and arranged to elastically counteract axial thrust forces tending to move the frusto-conical surfaces (8,9) close to each other;
- a cup-shaped auxiliary thrust element (22) fastened to the shock-absorber (5) such that a base portion (22a) thereof is adiacent the central thrust element (4),
characterised in that
the inner surface of said annular retaining element (6) further comprises an upper circumferential edge portion (6a) extending inwardly with respect to the edge of said opening (3a) in the vehicle body,
and in that an auxiliary annular portion (20) is associated with the annular spring member (7) at the upper part thereof and it overlies said inwardly extending circumferential edge portion (6a) of the annular retaining element (6) and is operatively interposed between the retaining element (6a) and an upwardly and outwardly extending auxiliary frusto-conical surface (21) defined by said auxiliary thrust element (22).

2. A mounting member according to claim 1, characterized in that the central thrust element (4) is essentially defined by a shaped plate having a bottom portion (11) engaged to the end of the shock-absorber (5), an intermediate portion (12) defining the outer frusto-conical surface (9) in contact relationship with the annular member (7), and a perimetric portion (13) defining the rest housing (10a) for the spring (10).

3. A mounting member according to claim 1, characterized in that said annular spring member (7) is fully located in a spaced disposed below the motor-vehicle body (3).

4. A mounting member according to claim 1, characterized in that it further comprises at least one gasket (15) made of elastomeric material engaged to the rest housing (10a) of the central thrust element (4) and sandwiched between the spring (10) end and the rest housing itself.

5. A mounting member according to claim 4, characterized in that the annular spring member (7) and said gasket (15) are fixedly joined to said inner and outer frusto-conical surfaces (9, 8) and rest housing (10a) respectively by a rubber metal bond.

6. A mounting member according to claim 5 characterized in that it further comprises at least one coating layer (16, 16a) of elastomeric material applied to the surfaces of said central thrust element (4).

7. A mounting member according to claim 1, characterized in that it further comprises at least one bearing operatively interposed between the rest housing (10a) and the spring (10) end.

8. A mounting member according to claim 1, characterized in that said annular spring member (7) has at least one circumferential groove (17) defining first and second abutment surfaces (18, 19) designed to act in contrast relationship against each other for increasing the stiffness of the spring ring (7) when the load transmitted by the central thrust element (4) exceeds a predetermined value.

9. A mounting member according to claim 1, characterized in that said inner (9) and outer (8) frusto-conical surfaces have a tapering configuration the summit angle of which is wider than 60°.

10. A mounting member according to claim 1, characterized in that the annular spring member (7) has an axial stiffness included between 30 Kg/mm and 100 Kg/mm.

11. A mounting member according to claim 1, characterized in that said annular spring member (7) has a radial stiffness included between 60 Kg/mm and 200 Kg/mm.

12. A mounting member according to claim 1, characterized in that the ratio between the radial stiffness and axial stiffness of said annular spring member (7) is included between 1 and 4.

13. A mounting member according to claim 1, characterized in that said annular spring member (7) has a hardness in the range of 45 A Shore to 75 A Shore.

14. A suspension for a motor-vehicle wheel having a mounting member according to anyone of claims 1 to 13.

## Patentansprüche

1. Befestigungselement für die Verbindung einer Feder-Stoßdämpfereinheit an einem Fahrzeugaufbau, wobei das Befestigungselement über eine Ausnehmung (3a) im Fahrzeugaufbau zugänglich ist, wobei das Verbindungselement umfaßt:
- ein mittiges Schubelement (4), das an einem Ende eines Stoßdämpfers (5) befestigt ist und eine kegelstumpfförmige Außenfläche (8), die an der dem Stoßdämpfer abgewandten Seite angeordnet ist, und einen Auflagesitz (10a) aufweist, der im unteren Abschnitt des Schubelementes angeordnet und dazu bereitgestellt ist, das der Feder-Stoßdämpfereinheit zugehörende Federende (10) wirksam zu ergreifen;
- ein ringförmiges Gegenelement (6), das am Fahrzeugaufbau (3) befestigt ist und eine kegelstumpfförmige Innenfläche (9) aufweist, die zur kegelstumpfförmigen Außenfläche (8) des mittigen Schubelementes (4) gerichtet ist, wodurch das ringförmige Gegenelement (6) vollständig in einem Raum positioniert ist, der sich unterhalb des Fahrzeugaufbaues (3) befindet;
- einen ringförmigen Spannkörper (7), der aus einem Elastomer besteht und zwischen der kegelstumpfförmigen Außenfläche (8) des mittigen Schubelementes (4) und den kegelstumpfförmigen Innenflächen (9) des ringförmigen Gegenelementes (6) geschaltet und dazu bereitgestellt ist, axialen Schubkräften entgegenzuwirken, die dazu neigen, die kegelstumpfförmigen Flächen (8,9) aneinander zu nähern;
- ein becherförmig ausgebildetes Hilfschubelement, das am Stoßdämpfer (5) derart befestigt ist, daß dessen Basisabschnitt (22a) am mittigen Schubelement (4) anliegt,
dadurch gekennzeichnet,
daß die Innenfläche des ringförmigen Gegenelementes (6) überdies einen oberen, umlaufenden Randabschnitt (6a) umfaßt, der sich gegenüber dem Rand der Ausnehmung (3a) im Fahrzeugaufbau nach innen erstreckt,
und dadurch, daß ein ringförmiger Hilfsabschnitt (20) dem ringförmigen Spannkörper (7) in seinem oberen Abschnitt zugeordnet ist und sich dem umlaufenden, sich ins Innere (6a) erstreckenden Randabschnitt des ringförmigen Gegenelementes (6) überlagert und zwischen dem Ringelement (6a) und einer kegelstumpfförmigen, sich nach oben und nach außen erstreckenden Hilfsfläche (21) geschaltet ist, die durch das Hilfsschubelement (22) festgelegt ist.

2. Verbindungselement Anspruch 1, dadurch gekennzeichnet, daß das mittige Schubelement (4) im wesentlichen durch einen profilierten Teller festgelegt ist, der einen am Ende des Stoßdämpfers (5) angreifenden Grundabschnitt (11), einen die kegelstumpfförmige Außenfläche (9) in Berührung mit dem ringförmigen Körper (7) festlegenden Zwischenabschnitt (12) und einen umlaufenden, den Auflagesitz (10a) für die Feder (10) festlegenden Abschnitt (13) aufweist.

3. Verbindungselement nach Anspruch 1, dadurch gekennzeichnet, daß der ringförmige Spannkörper (7) vollständig in einem Raum angeordnet ist , der sich unterhalb des Fahrzeugaufbaues (3) befindet.

4. Verbindungselement nach Anspruch 1, dadurch gekennzeichnet, daß es überdies mindestens eine Dichtung (15) aus Elastomer umfaßt, die am Auflagesitz (10a) des mittigen Schubkörpers (4) in Zwischenschaltung zwischen dem Ende der Feder (10) und dem Auflagesitz selbst angreift.

5. Verbindugselement nach Anspruch 4, dadurch gekennzeichnet, daß der ringförmige Spannkörper (7) und die Dichtung (15) jeweils mit der kegelstumpfförmigen Innenfläche (9) und Außenfläche (8) und mit dem Auflagesitz (10a) über eine Gummi-Metallverbindung fest verbunden ist.

6. Verbindungselement nach Anspruch 5, dadurch gekennzeichnet, daß es über dies eine Überzugsschicht (16,16a) aus Elastomer umfaßt, die an den Flächen des mittigen Schubelementes (4) angebracht ist.

7. Verbindungselement nach Anspruch 1, dadurch gekennzeichnet, daß es überdies mindestens ein wirksam zwischen dem Auflagesitz (10a) und dem Ende der Feder (10) zwischengeschaltetes Lager umfaßt.

8. Verbindungselement nach Anspruch 1, dadurch gekennzeichnet, daß der ringförmige Spannkörper (7) mindestens eine umlaufende Kehle (17) besitzt, die eine erste und eine zweite Anschlagfläche (18,19) festlegt, die dazu bereitgestellt sind, gegeneinander entgegenzuwirken, um die Steifigheit des Spannrings (7) zu erhöhen, sobald die durch das mittige Schubelement (4) übertragene Last einen vorgegebenen Betrag übersteigt.

9. Verbindungselement nach Anspruch 1, dadurch gekennzeichnet, daß die kegelstumpfförmige Innenfläche (9) und Außenfläche (8) Konizitäten mit Scheitelwinkeln oberhalb 60° aufweisen.

10. Verbindungselement nach Anspruch 1, dadurch gekennzeichnet, daß der ringförmige Spannkörper (7) eine axiale Steifigheit zwischen 60 kg/mm und 200kg/mm besitzt.

11. Befestigungselement nach Anspruch 1, dadurch gekennzeichnet, daß der ringförmige Spannkörper (7) eine radiale Steifigkeit zwischen 1 und 4 besitzt.

12. Verbindungselement nach Anspruch 1, dadurch gekennzeichnet, daß das Verhältnis zwischen radialer und axialer Steifigheit des ringförmigen Spannkörpers (7) zwischen 1 und 4 liegt.

13. Verbindungselement nach Anspruch 1, dadurch gekennzeichnet, daß der ringförmige Spannkörper (7) eine Härte zwischen 45 Shore A und 75 Shore A besitzt.

14. Fahrzeugräderaufhängung mit einem Verbindungselement nach einem der Ansprüche von 1 bis 13.

## Revendications

1. Elément de montage pour connecter un ensemble ressort-amortisseur de chocs à la carrosserie d'un véhicule, l'élément de montage étant accessible à travers une ouverture (3a) dans la carrosserie du véhicule, l'élément de montage comportant:
- un élément central de poussée (4) fixé à une extrémité d'un amortisserur de chocs (5) et présentant une surface extérieure tronconique (8) tournée du côté opposé par rapport à l'amortisseur et un logement d'appui (10a) placé à la partie inférieure de l'élément de poussée et agencé pour engager de manière fonctionnelle l'extrémité d'un ressort (10) faisant partie de l'ensemble ressort-amortisseur de chocs;
- un élément annulaire de retenue (6) fixé à ladite carrosserie (3) et présentant une surface tronconique intérieure (9) tournée vers la surface tronconique extérieure (8) de l'élément central de poussée (4), de sorte que l'élément annulaire de retenue (6) est complètement mis en place dans un espace disposé au-dessous de la carrosserie (3) du véhicule;
- un corps annulaire élastique (7) réalisé en matière élastomère et interposé de manière fonctionelle entre la surface tronconique extérieure (8) de l'élément central de poussée (4) et les surfaces tronconiques intérieures (9) de l'élément annulaire de retenue (6) et agencé pour neutraliser élastiquement les forces de poussée axiales tendant à déplacer les surfaces tronconiques (8, 9) l'une vers l'autre;
- un élément de poussée auxiliaire en forme de cuvette(22) fixé à l'amortisseur de chocs (5) de telle sorte que sa portion de base (22a) est attenante à l'élément central de poussée (4),
caractérisé en ce que:
la surface intérieure dudit élément annulaire de retenue (6) comporte en outre une portion de bord circonférentielle supérieure (6a) s'étendant vers l'intérieur par rapport au bord de ladite ouverture (3a) dans la carrosserie du véhicule,
et en ce qu'une portion annulaire auxiliaire (20) est associée au corps annulaire élastique (7), à sa partie supérieure, et elle recouvre ladite portion de bord circonférentielle s'étendant vers l'intérieur (6a) de l'élément annulaire de retenue (6) et est interposée de manière fonctionnelle entre l'élément de retenue (6a) et une surface tronconique auxiliaire s'étendant vers le haut et vers l'extérieur (21), définie par ledit élément auxiliaire de poussée (22).

2. Elément de montage selon la revendication 1, caractérisé en ce que l'élément central de poussée (4) est essentiellement défini par un plateau convenablement conformé ayant une portion de fond (11) engagée à l'extrémité de l'amortisseur de chocs (5), une portion intermédiaire (12) définissant la surface extérieure tronconique (9) en relation de contact avec le corps annulaire (7), et une portion périmétrique (13) définissant le logement d'appui (10a) pour le ressort (10).

3. Elément de montage selon la revendication 1, caractérisé en ce que ledit corps annulaire élastique (7) est complètement mis dans un espace disposé au-dessous de la carrosserie du véhicule (3).

4. Elément de montage selon la revendication 1, caractérisé en ce qu'il comporte en outre au moins une garniture (15) de matière élastomère engagée au logement d'appui (10a) de l'élément central de poussée (4) et serrée entre l'extrémité du ressort (10) et le logement d'appui lui-même.

5. Elément de montage selon la revendication 4, caractérisé en ce que le corps annulaire élastique (7) et ladite garniture (15) sont unis de manière fixe respectivement auxdites surfaces tronconiques intérieure et extérieure (9, 8) et au logement d'appui par un lien caoutchouc-métal.

6. Elément de montage selon la revendication 5, caractérisé en ce qu'il comporte au moins une couche de revêtement (16, 16a) de matière élastomère appliquée aux surfaces dudit élément central de poussée (4).

7. Elément de montage selon la revendication 1, caractérisé en ce qu'il comporte en outre au moins un palier interposé de manière fonctionnelle entre le logement d'appui (10a) et l'extrémité du ressort (10).

8. Elément de montage selon la revendication 1, caractérisé en ce que ledit corps annulaire élastique (7) a au moins une rainure circonférentielle (17) définissant des première et deuxième surfaces de butée (18, 19) destinées à agir à l'encontre l'une de l'autre pour augmenter la rigidité de la bague élastique (7) quand la charge transmise par l'élément central de poussée dépasse une valeur prédéterminée.

9. Elément de montage selon la revendication 1, caractérisé en ce que lesdites surfaces tronconiques intérieure (9) et extérieure (8) ont une configuration finissant en cône dont l'angle au sommet a une largeur supérieure à 60°.

10. Elément de montage selon la revendication 1, caractérisé en ce que le corps annulaire élastique (7) a une rigidité axiale comprise entre 30 kg/mm et 100 kg/mm.

11. Elément de montage selon la revendication 1, caractérisé en ce que ledit corps annulaire élastique (7) a une rigidité radiale comprise entre 60 kg/mm et 200 kg/mm.

12. Elément de montage selon la revendication 1, caractérisé en ce que le rapport entre la rigidité radiale et la rigidité axiale dudit corps annulaire élastique (7) est comprise entre 1 et 4.

13. Elément de montage selon la revendication 1, caractérisé en ce que ledit corps annulaire élastique (7) a une dureté de l'ordre de 45 Shore A à 75 Shore A.

14. Suspension pour roue de véhicule ayant un élément de montage suivant l'une quelconque des revendications 1 à 13.
